# EUROPÄISCHE PATENTSCHRIFT

(11) **EP 0 952 319 B1**
(45) Veröffentlichungstag und Bekanntmachung des Hinweises auf die Patenterteilung: **11.08.2004**
(21) Anmeldenummer: 99103238.4
(22) Anmeldetag: 19.02.1999
(51) Int. Cl.: F02D 41/02, F01N 9/00, F01N 3/20

(54) **Verfahren und Vorrichtung zur Regelung der Temperatur einer Abgasbehandlungsanordnung**
Method and apparatus for temperature regulation of an exhaust gas treatment apparatus
Procédé et dispositif de régulation de température d'un dispositif de traitement de gaz d'échappement

(30) Priorität: 21.04.1998 DE 19817650
(43) Veröffentlichungstag der Anmeldung: 27.10.1999
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Grieser, Klemens, 40764 Langenfeld (DE); Dickers, Guido, 41068 Mönchengladbach (DE)
(74) Vertreter: Bonsmann, Manfred, Dipl.-Ing.

(56) Entgegenhaltungen:
- EP-A- 0 867 603
- EP-A- 0 905 355
- DE-A- 4 218 834
- US-A- 5 588 291
- US-A- 5 642 705
- PATENT ABSTRACTS OF JAPAN vol. 1997, no. 06, 30. Juni 1997 (1997-06-30) & JP 09 032540 A (HINO MOTORS LTD), 4. Februar 1997 (1997-02-04)

## Beschreibung

Die Erfindung betrifft ein verfahren zur Regelung der Temperatur einer Abgasbehandlungsanordnung im Abgassystem eines Verbrennungsmotors im Bereich einer vorgegebenen Soll-Temperatur mit einer Veränderungseinrichtung zur Veränderung der Temperatur der die Abgasbehandlungsanordnung durchströmenden Abgase, durch die der Abgasbehandlungsanordnung in Abhängigkeit eines Steuersignals einer Motorsteuerungseinrichtung kühlere oder heißere Abgase zugeführt werden, sowie mit einer Einrichtung zur Bestimmung der Ist-Temperatur der Abgasbehandlungsanordnung und einer Einrichtung zur Bestimmung einer näherungsweise ein Maß für den Energieeintrag in die Abgasbehandlungsanordnung darstellenden Größe sowie eine Vorrichtung zur Durchführung des Verfahrens.

Eine derartige Temperaturregelung ist insbesondere bei Stickoxidfallen (NOₓ-Traps), wie sie zur Abgasreinigung bei Motoren mit Magergemischverbrennung (Lean Burn Engines) eingesetzt werden, erforderlich. Während herkömmliche Dreiwegekatalysatoren über einen relativ weiten Temperaturbereich zufriedenstellende Konvertierungsergebnisse erzielen und auch die Empfindlichkeit gegenüber Überhitzung in den letzten Jahren reduziert werden konnte, arbeiten bekannte Stickoxidfallen nur in einem relativ begrenzten Temperaturbereich in zufriedenstellender Weise. Bei niedrigeren Temperaturen adsorbiert die Stickoxidfalle die Schadstoffe nicht ausreichend effizient. Bei zu hohen Temperaturen werden die adsorbierten Schadstoffe teilweise wieder freigesetzt, was die Reinigungseffizienz beeinträchtigt. Bei noch höheren Temperaturen kann die Stickoxidfalle vorschnell altern oder gar dauerhaft beschädigt werden. Angesichts der unter wechselnden Motorbedingungen in einem Bereich zwischen 200 bis 1000°C variierenden Abgastemperaturen ist eine Regelung der die Abgasbehandlungsanordnung durchströmenden Abgase erforderlich.

In der JP-A-09032540 wird eine Einrichtung zur Regelung der Reinigung einer Stickoxidfalle im Abgasweg eines Dieselmotors gezeigt. Wenn die vor der Stickoxidfalle gemessene Temperatur einen Schwellwert überschreitet, wird durch Injektion eines Reduktionsmittels vor der Falle deren Reinigung eingeleitet. Während des Reinigungsvorganges wird dann von einer Regeleinheit über ein kontinuierliches Regelventil die Zufuhr von Frischluft in den Abgasweg vor der Stickoxidfalle und damit die Temperatur des durch die Falle strömenden Gases geregelt. Diese Regelung erfolgt mit Hilfe von gespeicherten Kennfeldern, welche als Eingangsgrößen die Temperatur vor der Stickoxidfalle, die Motordrehzahl und die Motorlast verwenden.

In der nicht vorveröffentlichten deutschen Patentanmeldung 197 03 295.8 wird ein Verfahren zur Regelung der Temperatur einer Katalysatoranordnung mit einer Stickoxidfalle vorgeschlagen, bei dem die Temperatur der Stickoxidfalle gemessen und die Stickoxidfalle im Magerbetriebsmodus über eine Einrichtung zur Veränderung der Abgastemperatur in einem dem optimalen Wirkungsgrad der Stickoxidfalle entsprechenden Temperaturbereich betrieben wird. Als Einrichtung zur Abgastemperaturveränderung kann eine Abgasleitung mit zwei, über ein von einem Stellglied angesteuerten Ventil auswählbaren Abgaswegen mit unterschiedlichen Abgaswärmeverlusten verwendet werden. Zur Durchführung der Regelung wird ein PI-Regelglied vorgeschlagen.

Es hat sich herausgestellt, daß der Temperatursensor im Abgasweg nicht vor, sondern vorzugsweise hinter wenigstens einem Teilelement der Stickoxidfalle angeordnet werden sollte. Diese Anordnung hat den besonderen Vorteil, daß im Fehlerfalle eine drohende Überhitzung der Stickoxidfalle erkannt und vermieden werden kann. Wenn nämlich durch ein Leck im Abgasweg vor der Stickoxidfalle Außenluft in das Abgassystem eindringt, so treten bei Motorbetrieb mit angereichertem Gemisch (z.B. Vollast) exotherme Reaktion mit unverbrannten Kraftstoffbestandteilen auf, die zu einer Überhitzung des Stickoxidfallensubstrats führen können. Wird der Temperatursensor vor der Stickoxidfalle angeordnet, so kann eine derartige Überhitzungsgefahr nicht erkannt werden.

Die Anordnung hinter wenigstens einem Teilelement der Stickoxidfalle (z.B. zwischen zwei Teilelementen [sog. Bricks] einer Stickoxidfalle) hat jedoch den Nachteil, daß die Regelung wegen der thermischen Trägheit dieses Elementes sehr hohe Totzeiten aufweist. So führt eine Abgastemperaturveränderung erst mit einer Verzögerung von einigen 10 s zu einer entsprechenden Änderung der am Temperatursensor gemessenen Ist-Temperatur. Derartige Systeme sind mit konventionellen PI-Reglern nur schwer zu beherrschen, da nicht akzeptable Regelschwingungen auftreten. Zur Handhabung derartiger Systeme mit großer Totzeit sind sog. Totzeitregelungen vorgeschlagen worden. Bei Totzeitregelungen ist jedoch ein mathematisches Modell des zu regelnden Systems sowie eine vorherige Abschätzung der Totzeit erforderlich. Unter ungewöhnlichen Betriebsbedingungen oder im Fehlerfalle können diese Modelle versagen, so daß es zu einem unkontrollierten Regelungsverhalten kommen kann.

Der Erfindung liegt die Aufgabe zugrunde, ein Verfahren der eingangs genannten Art zu schaffen, bei dem mit einfachen Mitteln eine ungeachtet der großen Totzeiten unter allen Betriebsbedingungen stabile Temperaturregelung ermöglicht wird.

Zur Lösung der vorstehend genannten Aufgabe ist gemäß Anspruch 1 vorgesehen, daß die Ist-Temperatur mit der Soll-Temperatur in einem Zweipunkt-Regelglied verglichen wird, welches ein eine Abgaskühlung oder Abgaserwärmung anzeigendes Ausgangssignal erzeugt, und daß aus diesem Ausgangssignal ein modifiziertes Ausgangssignal erzeugt und der Veränderungseinrichtung zugeführt wird, derart, daß bei einem eine Abgaserwärmung anzeigenden Ausgangssignal bei zunehmender Energieeintragsgröße dieses in einer eine Abgaskühlung bewirkenden Richtung modifiziert wird und/oder daß bei einem eine Abgaskühlung anzeigenden Ausgangssignal dieses bei abnehmender Energieeintragsgröße in einer eine Abgaserwärmung bewirkenden Richtung modifiziert wird. Dadurch, daß das Ausgangssignal des Zweipunkt-Regelglieds abgängig von der Energieeintragsgröße modifiziert wird, wird eine Stellwertbegrenzung erreicht und so ein Überschwingen der Temperatur der Abgasbehandlungsanordnung vermieden. Vorzugsweise ist eine Stellwertbegrenzung sowohl bei einem eine Abgaserwärmung als auch bei einem eine Abgaskühlung anzeigenden Ausgangssignal vorgesehen. Es kann jedoch auch eine Stellwertbegrenzung in nur einem der genannten Fälle vorgesehen sein.

In vorteilhafter Ausgestaltung der Erfindung kann vorgesehen sein, daß die Modifikation durch Modulation des Ausgangssignals mit einem Rechtecksignal erfolgt, dessen Tastverhältnis bei einem eine Abgaserwärmung anzeigenden Ausgangssignal - ausgehend von einem ein ständiges Beheizen anzeigenden Tastverhältnis - bei Überschreiten einer vorgegebenen Motorbetriebsbedingung mit zunehmender Energieeintragsgröße in Richtung einer zunehmenden Abgaskühlung verändert wird und/oder dessen Tastverhältnis bei einem eine Abgaskühlung anzeigenden Ausgangssignal - ausgehend von einem eine ständige Kühlung anzeigenden Tastverhältnis - bei Unterschreiten einer vorgegebenen Motorbetriebsbedingung mit abnehmender Energieeintragsgröße in Richtung einer zunehmenden Abgaserwärmung verändert wird. Das Rechtecksignal weist vorzugsweise eine Periode auf, der der Regelaktuator mechanisch ohne weiteres folgen kann (z.B. 10 s). Durch die thermische Trägheit der Abgasbehandlungsanordnung werden die durch die Modulation bedingten Oszillationen der Abgastemperatur weggemittelt.

Weiterhin kann vorgesehen sein, daß die Bestimmung der Energieeintragsgröße wenigstens anhand des näherungsweise den aktuellen Abgasmassenstrom repräsentierenden Luftmassenstroms im Einlaßsystem des Verbrennungsmotors erfolgt. Der Abgasmassenstrom ist näherungsweise ein Maß für die Wärmeenergie pro Zeiteinheit, die dem Katalysator zugeführt wird. Je größer dieser Energieeintrag ist, desto schneller paßt sich das Stickoxidfallenmaterial der Abgastemperatur an und desto stärker muß die Stellwertbegrenzung ausfallen. Es können jedoch auch weitere Motorbetriebsparameter bei der Stellwertbegrenzung berücksichtigt werden, wie z.B. die Fahrzeuggeschwindigkeit, die die Wärmeverluste durch den Fahrtwind an der Stickoxidfalle maßgeblich beeinflußt.

In zweckmäßiger Weise kann außerdem vorgesehen sein, daß das Tastverhältnis anhand eines funktionalen Zusammenhangs abhängig von der Energieeintragsgröße, dem Ausgangssignal des Zweipunkt-Regelglieds sowie anhand des Soll-Temperaturwerts bestimmt wird. Bei dem funktionalen Zusammenhang kann es sich um einen Tabellenspeicher (Kennfeld) oder eine analytische Funktion mit den genannten Indexgrößen bzw. Parametern handeln. Der Soll-Temperaturwert wird üblicherweise während des normalen Motorbetriebes fest vorgegeben. Insbesondere während eines Entschwefelungszyklus bei einer Stickoxidfalle wird die Soll-Temperatur der Stickoxidfalle jedoch erhöht. Da die Strömungs- und Abstrahlungstemperaturverluste sich nicht linear zur Stickoxidfallentemperatur verhalten, sind für unterschiedliche Soll-Temperaturwerte unterschiedliche Tastverhältnis-Kennfelder vorgesehen.

Das Verhalten des erfindungsgemäßen Regelungsverfahrens kann weiterhin wesentlich dadurch verbessert werden, daß das Zweipunkt-Regelglied mit einem voreilenden Verhalten versehen wird.

Das voreilende Verhalten kann vorzugsweise durch zeitliche Differenzierung des Ist-Temperatursignals und gewichtete Addition des Ableitungssignals zu dem Ist-Temperatursignal und Zuführung des Summensignals zu dem Komparator des Zweipunkt-Regelglieds realisiert werden. Dadurch wird die Änderungsgeschwindigkeit des Ist-Temperatursignals mit in die Regelung einbezogen, so daß einem Überschwingen bereits frühzeitig entgegengewirkt werden kann.

Der Gewichtungsfaktor des Ableitungssignals kann vorzugsweise abhängig vom Ausgangssignal des Zweipunkt-Regelglieds und abhängig von einer den Energieeintrag in die Abgasbehandlungsanordnung repräsentierenden Größe bestimmt werden. So kann die Regelung bei größerem Energieeintrag empfindlicher auf Änderungen des Ist-Temperaturwertes reagieren.

Bei einer Vorrichtung zur Durchführung des Verfahrens weist die Veränderungseinrichtung ein Abgasventil mit zwei Stellungen auf, bei denen das Abgas über zwei Abgaswege mit unterschiedlichen Wärmeverlusten geführt wird, und die Einrichtung zur Bestimmung der Ist-Temperatur der Abgasbehandlungsanordnung weist einen Temperatursensor auf, der im Abgasweg hinter wenigstens einem Teilelement der Abgasbehandlungsanordnung angeordnet ist. Durch diese Anordnung wird die Temperatur der Abgasbehandlungsanordnung auch im Fehlerfalle, bei dem eine exotherme Reaktion in der Abgasbehandlungsanordnung stattfinden kann, sicher erkannt und bei der Regelung berücksichtigt.

Ein Vorteil des erfindungsgemäßen Verfahrens besteht darin, daß die Regelung auf der Grundlage eines einfachen und robusten Zweipunkt-Regelglieds durchgeführt werden kann. Insbesondere sind keine Temperaturmodelle der Abgasbehandlungsanordnung oder Annahmen über die Totzeit des Regelkreises erforderlich. Trotz der vorhandenen großen Totzeiten wird ein gutes Regelverhalten erzielt.

Ein weiterer Vorteil des erfindungsgemäßen Verfahrens besteht darin, daß ein binäres Stellsignal erzeugt wird. Somit kann ein kostengünstiger Zweistellungs-Aktuator verwendet werden, der ohne einen Sensor für die Lagerückmeldung auskommt.

Die Erfindung wird nachfolgend anhand der Zeichnungen beispielhaft näher erläutert.

Es zeigen:
- Fig. 1: eine schematische Darstellung einer Abgasanlage eines Verbrennungsmotors sowie ein schematisches Blockdiagramm des erfindungsgemäßen Verfahrens,
- Fig. 2: eine detaillierteres Blockdiagramm des erfindungsgemäßen Zweipunktregelalgorithmus, und
- Fig. 3: ein detaillierteres Blockdiagramm des erfindungsgemäßen Stellwertbegrenzungbegrenzungsalgorithmus.

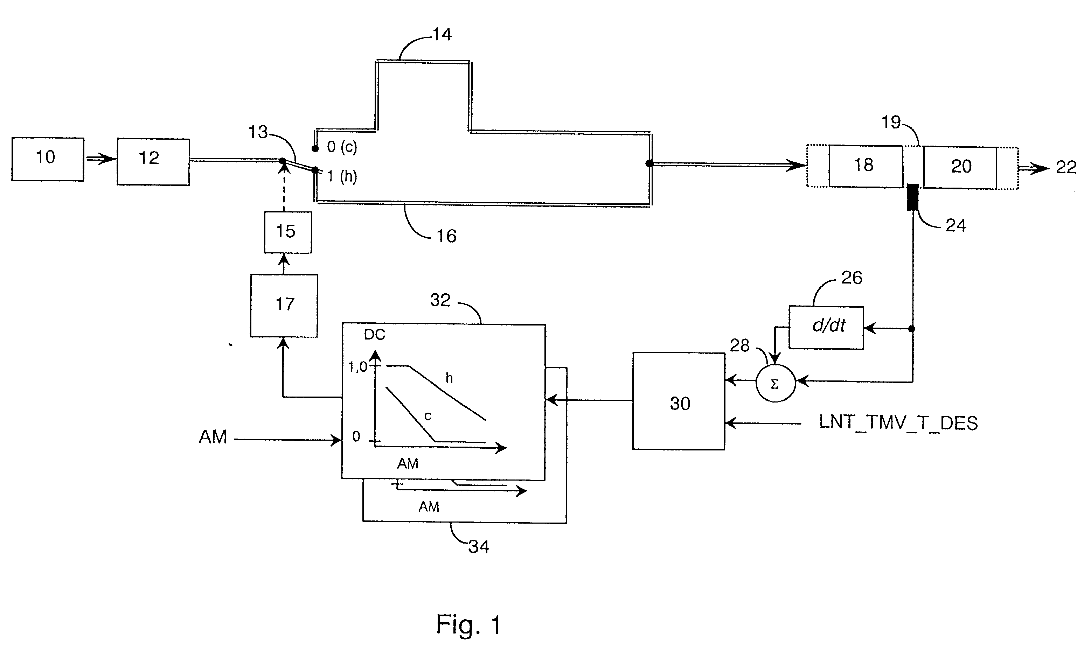

Gemäß Fig. 1 erzeugt ein mit 10 bezeichneter Verbrennungsmotor Abgase, die über ein Abgasrohr einem mit 12 bezeichneten Dreiwegekatalysator zugeführt werden. Der Dreiwegekatalysator 12 ist nahe am Motor 10 angeordnet (sog. Light Off Catalyst), so daß eine schnelle Aufheizung nach dem Start des Verbrennungsmotors 10 gewährleistet ist. Im Abgasweg ist ebenfalls in räumlicher Nähe des Motors 10 ein Abgasventil 13 vorgesehen, mittels dessen die Abgase wahlweise über zwei verschiedene Abgaswege 14, 16 mit unterschiedlichen Abgaswärmeverlusten geführt werden können. Der Abgasweg 14 weist eine Kühlschleife mit größeren Abgaswärmeverlusten als beim Abgasweg 16 auf, der so kurz wie möglich ausgebildet ist. Das Abgasventil 13 wird von einem Zweistellungs-Aktuator 15 (z.B. einem Solenoid-Aktuator) betätigt. Das Abgasventil ist in Fig. 1 schematisch als Umschaltventil zwischen den Abgaswegen 14, 16 dargestellt. Es kann aber auch vorgesehen sein, daß die Abgaswege 14, 16 mit deutlich unterschiedlichen Strömungswiderständen ausgebildet sind, wobei das Ventil 13 lediglich den Abgasweg mit den geringeren Strömungwiderständen öffnet bzw. verschließt. Bei offenem Ventil 13 strömt in diesem Falle das Abgas überwiegend durch den Abgasweg mit dem niedrigeren Strömungswiderstand; bei geschlossenem Ventil strömt es dagegen durch den Abgasweg mit höherem Strömungswiderstand. In räumlicher Entfernung vom Verbrennungsmotor 10 ist im Abgasweg eine Stickoxidfallenanordnung 19 angeordnet, die in einem gemeinsamen Gehäuse zwei Träger 18, 20 mit Katalysatorsubstrat aufweist. Zwischen den Trägern 18, 20 ist ein Temperatursensor 24 vorgesehen. Die gereinigten Abgase werden über eine Auspuffanlage 22 abgeführt.

Der Ventilaktuator 15 sowie der Temperaturmeßwert des Sensors 24 stehen mit einer Regelungseinrichtung in Verbindung, die als Teil einer elektronischen Motorsteuerung ausgebildet ist. Die Motorsteuerung arbeitet auf Mikroprozessor-Basis und weist die übliche Peripherie (ROM, RAM, nicht flüchtiger Speicher, Zeitgeber sowie Ein/Ausgabe-Ports) auf, mittels derer die Motorsteuerung eine Vielzahl von Motormeßwerten empfängt und eine Vielzahl von Steuersignalen z.B. an die Zünd- und Einspritzanlage leitet. Der Meßwert des Temperatursensors 24 wird einem Zweipunkt-Regelglied 30 zugeführt, der als Sollwert die vorgegebene Solltemperatur LNT_TMV_T_DES erhält. Das Signal des Sensors 24 wird bei 26 zusätzlich differenziert und auf den dem Regelglied 30 zugeführten Wert bei 28 aufaddiert. Der Zweipunkt-Regler 30 liefert ein binäres Ausgangssignal "Heizen" (h) oder "Kühlen" (c). Dieses Ausgangssignal wird einer Stellwertbegrenzung unterzogen und anschließend dem Aktuator 15 zugeführt. Bei der Stellwertbegrenzung wird das binäre Ausgangssignal des Zweipunkt-Reglers 30 mit einem Rechtecksignal moduliert. Das Tastverhältnis ist in Tabellenspeichern 32, 34 gespeichert. Abhängig vom Ausgangssignal sind jeweils zwei verschiedene Kennfelder h (Heizen) und c (Kühlen) vorgesehen, die die aufzumodulierenden Tastverhältnisse abhängig vom aktuellen Abgasmassenstrom enthalten. Der Abgasmassenstrom entspricht näherungsweise dem Luftmassenstrom AM, der von der Motorsteuerung über einen (nicht dargestellten) Luftmassenstromsensor bestimmt wird. Für unterschiedliche Soll-Temperaturwerte LNT_TMV_T_DES sind jeweils unterschiedliche Kennfelder 32, 34 vorgesehen. Die ermittelten Tastverhältnisse werden von einem Rechteckgenerator 17 in Ansteuerungsmuster für den Aktuator 15 umgesetzt. Wie bei 32 schematisch dargestellt, wird bei Vorliegen eines "Heizen"-Ausgangssignals das Ventil 13 bei niedrigen Abgasmassenströmen ständig in der Stellung "1" (Heizen) gehalten. Bei höheren Abgasmassenströmen wird die Heizleistung zunehmend reduziert. Bei Vorliegen eines "Kühlen"-Ausgangssignals wird bei niedrigen Abgasmassenströmen nur mit reduzierter Leistung gekühlt. Bei höheren Abgasmassenströmen steigt die Kühlintensität, bis diese ab einem bestimmten Abgasmassenstrom ihren Maximalwert erreicht. Die Kennfelder 32, 34 werden vorzugsweise empirisch am Motorprüfstand bestimmt.

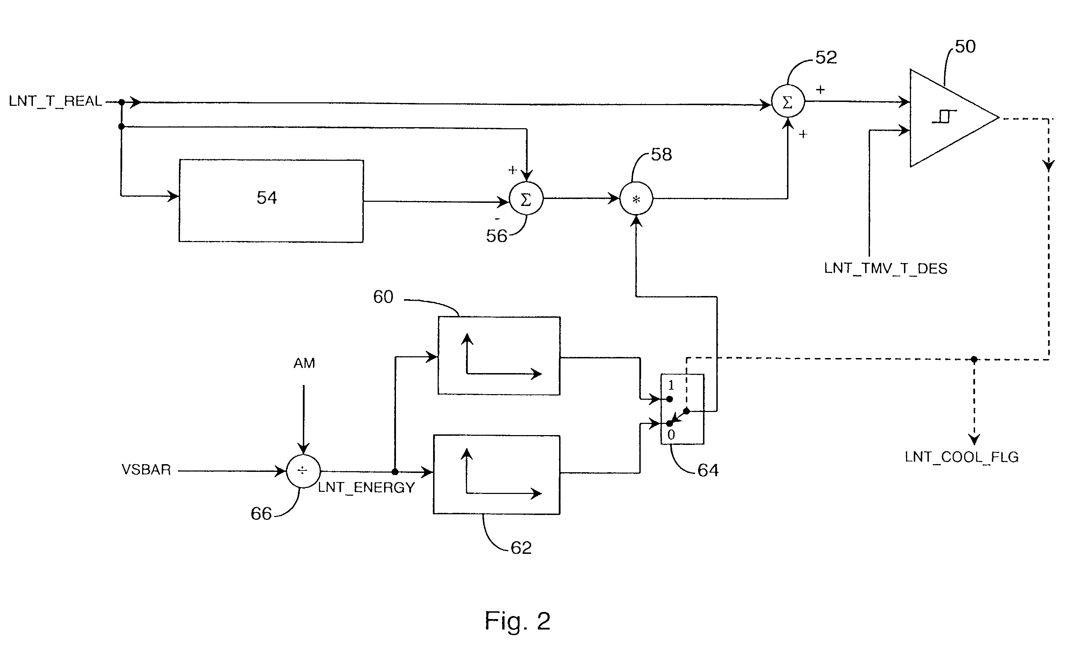

In Fig. 2 ist der Aufbau des Zweipunkt-Regelglieds detaillierter gezeigt. Der digitalisierte Meßwert des Temperatursensors LNT_T_REAL wird in einem hysteresebehafteten Komparator 50 mit dem vorgegebenen Soll-Temperaturwert LNT_TMV_T_DES verglichen. Der Soll-Temperaturwert LNT_TMV_T_DES wird von einer übergeordneten Steuereinheit vorgegeben und kann z.B. zur Durchführung eines Entschwefelungszyklus variiert werden. Der Komparator liefert ein binäres Ausgangssignal LNT_COOL_FLG. Auf den Ist-Temperaturwert wird vor dem Komparator 50 ein differenziertes Temperatursignal bei 52 aufaddiert. Dieses wird durch ein Tiefpaßfilter bei 54 und Subtraktion bei 56 gewonnen. Das so gewonnene Signal wird bei 58 mit einem Gewichtungsfaktor multipliziert. Der Gewichtungsfaktor wird abhängig vom Ausgangssignal LNT_T_COOL_FLG aus Kennfeldern 60 bzw. 62 (Auswahl über Schalter 64) entnommen. Die Kennfelder enthalten den Gewichtungsfaktor abhängig von einer Größe LNT_ENERGY, die näherungsweise den Energieeintrag in die Stickoxidfalle repräsentiert. Diese wird bei 66 durch Division des Luftmassenstroms AM durch die Fahrzeuggeschwindigkeit VSBAR bestimmt (je größer der Abgasmassenstrom ist, desto mehr Wärmeenergie wird der Stickoxidfalle zugeführt; je größer dagegen die Fahrzeuggeschwindigkeit ist, desto größer ist die Abkühlung durch den Fahrtwind). Der Gewichtungsfaktor wird tendenziell bei größerem Energieeintrag erhöht, so daß die Regelung schneller auf Ist-Temperaturtendenzen reagiert.

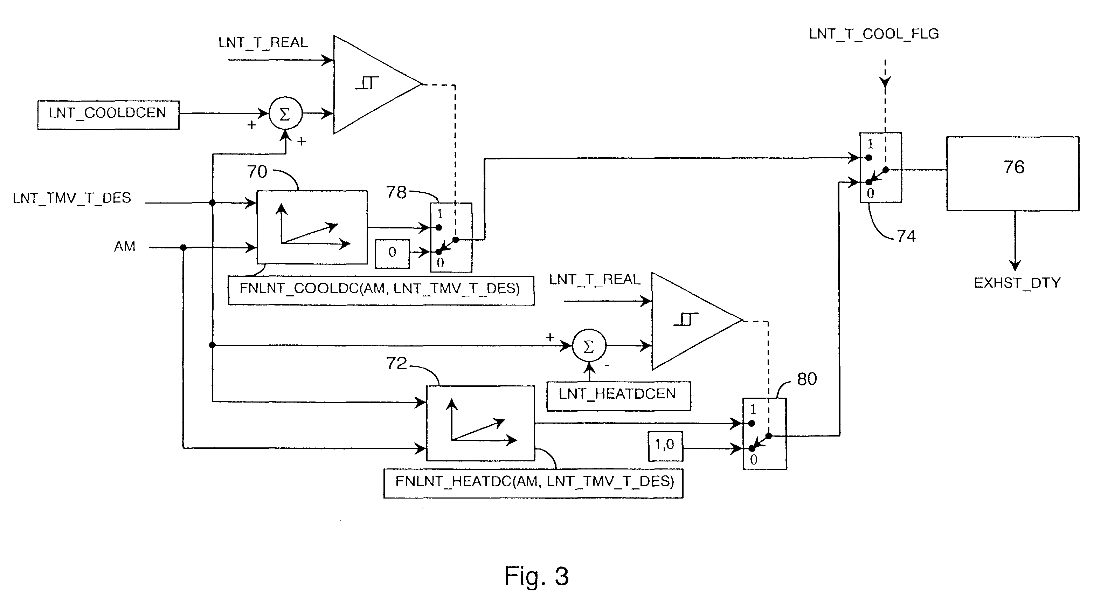

In Fig. 3 ist die Funktionsweise der Stellwertbegrenzung detaillierter dargestellt. Kernpunkt sind die Kennfelder FNLNT_COOLDC 70 bzw. FNLNT_HEATDC 72, die die Tastverhältnisse abhängig vom Abgasmassenstrom repräsentiert durch AM und der gewünschten Soll-Temperatur LNT_TMV_T_DES enthalten. Alternativ könnte auch eine andere den Energieeintrag in die Stickoxidfalle charakterisierende Größe, z.B. die Größe LNT_ENERGY aus Fig. 2, als Parameter für die Kennfelder 70, 72 verwendet werden. Das Ausgangssignal der Kennfelder 70, 72 wird abhängig von dem gemäß Fig. 2 bestimmten Flag LNT_T_COOL_FLG durch den Schalter 74 einem Rechteckgenerator 76 zugeführt, der das Signal zur Ansteuerung des Abgasventils EXHST_DTY erzeugt. Die Stellwertbegrenzung kann zusätzlich durch Schalter 78, 80 deaktiviert werden. Falls gemäß LNT_T_COOL_FLG eine Kühlung vorgesehen ist, geschieht dies, wenn die Ist-Temperatur einen vorgegebenen Wert LNT_TMV_T_DES zuzüglich der Konstante LNT_COOLDCEN überschreitet. Umgekehrt wird bei Heizung die Stellwertbegrenzung bei Unterschreiten der Solltemperatur abzüglich der Konstante LNT_HEATDCEN deaktiviert.

## Patentansprüche

1. Verfahren zur Regelung der Temperatur einer Abgasbehandlungsanordnung (19) im Abgassystem eines Verbrennungsmotors (10) im Bereich einer vorgegebenen Soll-Temperatur (LNT_TMV_T_DES) mit einer Veränderungseinrichtung (15) zur Veränderung der Temperatur der die Abgasbehandlungsanordnung (19) durchströmenden Abgase, durch die der Abgasbehandlungsanordnung (19) in Abhängigkeit eines Steuersignals einer Motorsteuerungseinrichtung kühlere oder heißere Abgase zugeführt werden, sowie mit einer Einrichtung (24) zur Bestimmung der Ist-Temperatur der Abgase hinter wenigstens einem Teilelement (18) der Abgasbehandlungsanordnung (19) und einer Einrichtung zur Bestimmung einer näherungsweise ein Maß für den Energieeintrag in die Abgasbehandlungsanordnung darstellenden Größe (AM), **dadurch gekennzeichnet, daß** die Ist-Temperatur mit der Soll-Temperatur in einem Zweipunkt-Regelglied (30) verglichen wird, welches ein eine Abgaskühlung oder Abgaserwärmung anzeigendes Ausgangssignal erzeugt, und daß aus diesem Ausgangssignal ein modifiziertes Ausgangssignal erzeugt und der Veränderungseinriehtung (15) zugeführt wird, derart, daß bei einem eine Abgaserwärmung anzeigenden Ausgangssignal bei zunehmender Energieeintragsgröße dieses in einer eine Abgaskühlung bewirkenden Richtung modifiziert wird und/oder daß bei einem eine Abgaskühlung anzeigenden Ausgangssignal dieses bei abnehmender Energieeintragsgröße in einer eine Abgaserwärmung bewirkenden Richtung modifiziert wird.

2. Verfahren nach Anspruch 1, **dadurch gekennzeichnet, daß** die Modifikation durch Modulation des Ausgangssignals mit einem Rechtecksignal erfolgt, dessen Tastverhältnis bei einem eine Abgaserwärmung anzeigenden Ausgangssignal - ausgehend von einem ein ständiges Beheizen anzeigenden Tastverhältnis - bei Überschreiten einer vorgegebenen Energieeintragsgröße mit zunehmender Energieeintragsgröße in Richtung einer zunehmenden Abgaskühlung verändert wird und/oder dessen Tastverhältnis bei einem eine Abgaskühlung anzeigenden Ausgangssignal - ausgehend von einem eine ständige Kühlung anzeigenden Tastverhältnis - bei Unterschreiten einer vorgegebenen Energieeintragsgröße mit abnehmender Energieeintragsgröße in Richtung einer zunehmenden Abgaserwärmung verändert wird.

3. Verfahren nach Anspruch 1 oder 2, **dadurch gekennzeichnet, daß** die Bestimmung der Energieeintragsgröße wenigstens anhand des näherungsweise den aktuellen Abgasmassenstrom repräsentierenden Luftmassenstroms (AM) im Einlaßsystem des Verbrennungsmotors erfolgt.

4. Verfahren nach einem der Ansprüche 1 bis 3, dadurch gekennzeichnen, daß das Tastverhältnis anhand eines funktionalen Zusammenhangs abhängig von der Energieeintragsgröße, dem Ausgangssignal des Zweipunkt-Regelglieds (39) sowie anhand des Soll-Temperaturwerts bestimmt wird.

5. Verfahren nach einem der Ansprüche 1 bis 4, **dadurch gekennzeichnet, daß** das Zweipunkt-Regelglied ein voreilendes Verhalten aufweist.

6. Verfahren nach Anspruch 5, **dadurch gekennzeichnet, daß** das voreilende Verhalten durch zeitliche Differenzierung des Ist-Temperatursignals und mit einem Gewichtungsfaktor gewichtete Addition des aus der Differenzierung resultierenden Ableitungssignals zu dem Ist-Temperatursignal und Zuführung des Summensignals zu dem Komparator des zweipunkt-Regelglieds realisiert wird.

7. Verfahren nach Anspruch 6, **dadurch gekennzeichnet, daß** der Gewichtungsfaktor des Ableitungssignals abhängig vom Ausgangssignal des Zweipunkt-Regelglieds und abhängig von einer den Energieeintrag in die Abgasbehandlungsanordnung repräsentierenden Größe bestimmt wird.

8. Vorrichtung zur Regelung der Temperatur einer Abgasbehandlungsanordnung (19) im Abgassystem eines Verbrennungsmotors (10) im Bereich einer vorgegebenen Soll-Temperatur (LNT_TMV_T_DES), welche dazu eingerichtet ist, ein Verfahren nach einem der Ansprüche 1 bis 7 auszuführen, enthaltend
a) eine veränderungseinrichtung (15) zur Veränderung der Temperatur der die Abgasbehandlungsanordnung (19) durchströmenden Abgase, durch die der Abgasbehandlungsanordnung (19) in Abhängigkeit eines Steuersignals einer Motorsteuerungseinrichtung kühlere oder heißere Abgase zugeführt werden können, wobei die Veränderungseinrichtung ein Abgasventil (13) mit zwei Stellungen, bei denen das Abgas über zwei Abgaswege (14, 16) mit unterschiedlichen Wärmeverlusten geführt wird, aufweist,
b) eine Einrichtung (24) zur Bestimmung der Ist-Temperatur der Abgase hinter wenigstens einem Teilelement (18) der Abgasbehandlungsanordnung (19),
c) eine Einrichtung zur Bestimmung einer näherungsweise ein Maß für den Energieeintrag in die Abgasbehandlungsanordnung darstellenden Größe (AM),
d) einem Zweipunkt-Regelglied (30), in dem die Ist-Temperatur mit der Soll-Temperatur verglichen werden kann, und welches ein eine Abgaskühlung oder Abgaserwärmung anzeigendes Ausgangssignal erzeugen kann, das der Veränderungseinrichtung zugeführt wird.

## Claims

1. Process to regulate the temperature of an exhaust treatment device (19) in the exhaust system of a combustion engine (10) in the area of a previously stated required temperature (LNT_TMV_T_DES) with a variable device (15) which allows the adjustment of the temperature of the exhaust fumes flowing through the exhaust treatment device (19), through which cooler or hotter exhaust fumes of the exhaust treatment device (19) dependant on a control signal of a motor control device are fed in such a way that by using a single sensor device (24) the actual temperature of the exhaust fumes can be at least determined behind one part of the element (18) of the exhaust treatment device (19) and with a single device be able to determine an approximate measurement for the air flow registered in the exhaust treatment device represented by the quantity (AM), **characterized by** the fact that the actual temperature will be compared to the required temperature by use of a dual input feedback control part (30), which generates an output signal indicating either a cooling of the exhaust fumes or a warming of the exhaust fumes, and as a result of this output signal a modified output signal is produced and passed to the variable control device (15) in such a way that from one output signal a warming of the exhaust fumes is indicated and as a result the increased temperature being registered will be cooled and/or as a result of an output signal which shows the exhaust fumes cooling will be modified by reducing air flow into the path of the exhaust and thereby causing a warming of the exhaust gases.

2. Process according to Claim 1, **characterized by** the fact that, the modification created by the modulation of the output signal results in a square wave signal, whose sensor comparison with an output signal shows a warming of the exhaust fumes - coming from a sensor comparison showing a continuous heating - will be altered as a result of an increase in the air flow intake quantity in the path of the exhaust fumes increasingly needing cooling and/or whose sensor comparison output signal which shows the cooling of the exhaust fumes - leaving from an output signal which shows a fixed position cooling - coming from the sensor indicating a continuous cooling - will be altered through the reduction of a previously stated air flow quantity with reducing air flow intake quantity in the path of the exhaust fumes which are getting progressively warmer.

3. Process according to Claim 1 and 2, which is **characterized by** the fact, that the air flow quantity calculation is at least resultant on the basis of approximate air mass flow (AM) gauged through the inlet system of the internal combustion engine.

4. Process ensuing from the claims 1 to 3, **characterized by** the fact that, the sensor relationship is derived from a functional combination dependant on the air flow quantity, the output signal of the dual input feedback control part (30) as well as the desired temperature.

5. Process in accordance with claims 1 to 4, **characterized by** the fact that, the dual input feedback control part features a hurry ahead reaction.

6. Process in accordance with Claim 5, **characterized by** the fact, that the hurry ahead reaction is realized, as a result of temporal differentiations of the actual temperature signal and the resulting derivative signal arising from the differentiation, with a loaded factor of a weighted addition to the actual temperature signal and the supply of the final signal to the comparator of the dual input feedback control part.

7. Process in accordance with Claim 6, **characterized by** the fact, that the loaded factor of the derived signal is defined dependent of the output signal of dual input feedback control part and dependant on one of the represented amounts defined by the air flow intake in the exhaust fumes treatment device.

8. Device used to regulate the temperature of an exhaust fumes treatment device (19) in the exhaust system of an combustion engine (10) with relation to a previously stated required temperature (LNT_TMV_T_DES), which is arranged to perform a process in accordance to that set out in Claims 1 to 7, consisting of:
a) A variable device (15) which allows the adjustment of the temperature of exhaust fumes passing through an exhaust treatment device (19) in conjunction with a control signal from an engine control device through which cooler or hotter exhaust fumes can be directed, whereby the variable device shows a two-positioned exhaust outlet valve (13) through which the exhaust fumes are directed in two separate exhaust pipes. (14,16) each with different heat losses,
b) a device (24) used to determine the actual temperature of exhaust fumes behind at least one part of the element (18) of the exhaust treatment device(19),
c) a device to determine a quantity (AM) approximately representing a measure for the energy intake into the exhaust treatment device,
d) a dual input feedback control part (30), in which the actual temperature can be compared to the desired temperature, and which can produce an output signal showing a cooling or a warming of the exhaust fumes, which are directed through the variable control.

## Revendications

1. Procédé de régulation de la température d'un dispositif (19) de traitement de gaz d'échappement dans le système d'échappement d'un moteur (10) à combustion interne, dans la plage d'une température de consigne préétablie (LNT_TMV_T_DES), comprenant un système variateur (15) pour faire varier la température des gaz d'échappement parcourant ledit dispositif de traitement (19), par l'intermédiaire duquel des gaz d'échappement plus frais ou plus chauds sont délivrés audit dispositif de traitement (19), en fonction d'un signal de commande d'un système de commande du moteur ; ainsi qu'un système (24) pour déterminer la température réelle des gaz d'échappement derrière au moins un élément partiel (18) du dispositif (19) de traitement des gaz d'échappement, et un système pour déterminer une grandeur (AM) représentant approximativement une mesure de l'apport d'énergie dans ledit dispositif de traitement des gaz d'échappement, **caractérisé par le fait que** la température réelle est comparée à la température de consigne dans un organe de régulation (30) à deux positions, qui génère un signal de sortie indicatif d'un refroidissement ou d'un réchauffage des gaz d'échappement ; et **par le fait qu'**un signal de sortie modifié est engendré sur la base de ce signal de sortie, puis est délivré au système variateur (15) de façon telle que, dans le cas d'un signal de sortie indiquant un réchauffage des gaz d'échappement, en présence d'une grandeur croissante de l'apport d'énergie, ledit signal soit modifié dans un sens provoquant un refroidissement des gaz d'échappement, et/ou de façon telle que, dans le cas d'un signal de sortie indiquant un refroidissement des gaz d'échappement, ledit signal soit modifié, en présence d'une grandeur décroissante de l'apport d'énergie, dans un sens provoquant un réchauffage desdits gaz d'échappement.

2. Procédé selon la revendication 1, **caractérisé par le fait que** la modification a lieu par modulation du signal de sortie à l'aide d'un signal rectangulaire dont le taux d'impulsions est modifié dans le sens d'un refroidissement croissant des gaz d'échappement en présence d'un signal de sortie indicatif d'un réchauffage des gaz d'échappement - sur la base d'un taux d'impulsions indiquant un chauffage permanent -, en cas de dépassement d'une grandeur préétablie de l'apport d'énergie, lorsque ladite grandeur de l'apport d'énergie augmente ; et/ou dont le taux d'impulsions est modifié dans le sens d'un réchauffage croissant des gaz d'échappement en présence d'un signal de sortie indicatif d'un refroidissement des gaz d'échappement - sur la base d'un taux d'impulsions indiquant un refroidissement permanent -, en cas de dépassement négatif d'une grandeur préétablie de l'apport d'énergie, lorsque ladite grandeur de l'apport d'énergie diminue.

3. Procédé selon la revendication 1 ou 2, **caractérisé par le fait que** la détermination de la grandeur de l'apport d'énergie s'opère au moins sur la base du débit massique d'air (AM) dans le système d'admission du moteur à combustion interne, représentant approximativement le débit massique effectif des gaz d'échappement.

4. Procédé selon l'une des revendications 1 à 3, **caractérisé par le fait que** le taux d'impulsions est déterminé sur la base d'une corrélation fonctionnelle, dépendant de la grandeur de l'apport d'énergie et du signal de sortie de l'organe de régulation (30) à deux positions, ainsi que sur la base de la valeur de la température de consigne.

5. Procédé selon l'une des revendications 1 à 4, **caractérisé par le fait que** l'organe de régulation à deux positions présente un comportement anticipatif.

6. Procédé selon la revendication 5, **caractérisé par le fait que** le comportement anticipatif est concrétisé par différenciation temporelle du signal de température réelle ; par ajout, audit signal de température réelle, avec pondération à l'aide d'un facteur pondérateur, du signal dérivé résultant de ladite différenciation ; et par délivrance du signal cumulé au comparateur de l'organe de régulation à deux positions.

7. Procédé selon la revendication 6, **caractérisé par le fait que** le facteur pondérateur du signal dérivé est déterminé en fonction du signal de sortie de l'organe de régulation à deux positions, et en fonction d'une grandeur représentative de l'apport d'énergie dans le dispositif de traitement des gaz d'échappement.

8. Dispositif de régulation de la température d'un dispositif (19) de traitement de gaz d'échappement dans le système d'échappement d'un moteur (10) à combustion interne, dans la plage d'une température de consigne préétablie (LNT_TMV_T_DES), agencé pour la mise en oeuvre d'un procédé conforme à l'une des revendications 1 à 7, et comprenant
a) un système variateur (15) pour faire varier la température des gaz d'échappement parcourant ledit dispositif de traitement (19), par l'intermédiaire duquel des gaz d'échappement plus frais ou plus chauds peuvent être délivrés audit dispositif de traitement (19) en fonction d'un signal de commande d'un système de commande du moteur, ledit système variateur présentant une soupape (13) des gaz d'échappement qui possède deux positions au niveau desquelles les gaz d'échappement sont guidés en empruntant deux trajets (14, 16) à déperditions thermiques différentes,
b) un système (24) pour déterminer la température réelle des gaz d'échappement derrière au moins un élément partiel (18) du dispositif (19) de traitement des gaz d'échappement,
c) un système pour déterminer une grandeur (AM) représentant approximativement une mesure de l'apport d'énergie dans ledit dispositif de traitement des gaz d'échappement,
d) un organe de régulation (30) à deux positions, dans lequel la température réelle peut être comparée à la température de consigne, et qui peut générer un signal de sortie indicatif d'un refroidissement ou d'un réchauffage des gaz d'échappement, délivré au système variateur.
